# EUROPÄISCHE PATENTSCHRIFT

(11) **EP 3 603 010 B1**
(45) Veröffentlichungstag und Bekanntmachung des Hinweises auf die Patenterteilung: **06.01.2021**
(21) Anmeldenummer: 18720145.4
(22) Anmeldetag: 13.04.2018
(51) Int. Cl.: H04L 29/06

(54) **VERFAHREN UND KORRESPONDIERENDES SYSTEM ZUR DATENÜBERTRAGUNG VON EINEM GERÄT AN EIN DATENVERWALTUNGSMITTEL**
METHOD AND CORRESPONDING SYSTEM FOR TRANSFERRING DATA FROM ONE DEVICE TO A DATA PROCESSING MEANS
PROCÉDÉ DE TRANSMISSION DE DONNÉES À PARTIR D'UN APPAREIL À UN GESTIONNAIRE DE DONNÉES, ET SYSTÈME CORRESPONDANT

(30) Priorität: 26.04.2017 EP 17168187
(43) Veröffentlichungstag der Anmeldung: 05.02.2020
(73) Patentinhaber: Siemens Aktiengesellschaft, 80333 München (DE)
(72) Erfinder: VERMA, Amit, 82024 Taufkirchen (DE)
(86) Internationale Anmeldenummer: PCT/EP2018/059512
(87) Internationale Veröffentlichungsnummer: WO 2018/197233

(56) Entgegenhaltungen:
- EP-A1- 1 870 026
- WO-A1-2016/097633

## Beschreibung

Die Erfindung betrifft ein Verfahren zur Datenübertragung von einem Gerät an ein Datenverwaltungsmittel.

Immer häufiger werden heutzutage Daten von einem Gerät an ein Datenverwaltungsmittel - beispielsweise eine Cloud - übermittelt. Das Datenverwaltungsmittel kann die Daten dann speichern, verwalten und/oder analysieren. Üblicherweise werden in dem Gerät große Datenmengen generiert, die üblicherweise über das Netzwerk an das Datenverwaltungsmittel übertragen werden sollen. Das kann dazu führen, dass das Netzwerk überlastet wird und/oder die Leistungsfähigkeit des Netzwerks beeinträchtigt wird. Werden die Daten per Mobilfunk an das Datenverwaltungsmittel gesendet, so entstehen außerdem aufgrund der großen Datenmengen hohe Kosten. Gegebenenfalls kann eine Bandbreite des Mobilfunks sogar ungenügend für das zu übermittelnde Datenvolumen sein.

Um das Datenvolumen zu reduzieren, können die Daten komprimiert werden. Durch die Datenkomprimierung kann das Datenvolumen jedoch nur in einem begrenzen Umfang reduziert werden.

Eine Aufgabe der Erfindung ist es, ein Verfahren zur Datenübertragung von einem Gerät an ein Datenverwaltungsmittel anzugeben, bei welchem das zu übertragende Datenvolumen reduziert wird.

WO 2016/097633 A1 (ORANGE [FR]) und EP 1 870 026 A1 (ROCHE DIAGNOSTICS GMBH [DE]; HOFFMANN LA ROCHE [CH]) offenbaren jeweils eine Lösung zur Reduktion des Volumens zu übertragender Daten.

Die Aufgabe wird gelöst durch ein Verfahren zur Datenübertragung von einem Gerät an ein Datenverwaltungsmittel gemäß Anspruch 1, bei dem erfindungsgemäß unter Verwendung von in dem Gerät vorliegenden Modellierungsdaten ein Modell bestimmt wird, welches die Modellierungsdaten beschreibt. Unter Verwendung des Modells werden erfindungsgemäß aus einer für eine Übertragung vorgesehenen Datenmenge diejenigen Daten, die tatsächlich an das Datenverwaltungsmittel zu übertragen sind, ausgewählt. Das Gerät überträgt die ausgewählten Daten an das Datenverwaltungsmittel.

Die Idee der Erfindung ist es, nicht alle Daten einer für eine Übertragung vorgesehenen Datenmenge übermitteln zu müssen. Anhand des Modells kann ausgewählt werden, welche Daten der Datenmenge an das Datenverwaltungsmittel übermittelt werden. Auf diese Weise kann die Anzahl an übertragenen Daten - und damit vorzugsweise ein übertragenes Datenvolumen - reduziert werden.

Prinzipiell wäre es auch möglich, das übertragene Datenvolumen zu reduzieren, indem beispielsweise jeder zweite Datenwert oder Datenpunkt einer für eine Übertragung vorgesehenen Datenmenge übermittelt wird. Dabei kann jedoch eine Charakteristik der Datenmenge verloren gehen. Durch die Bestimmung des Modells kann auf eine sinnvolle Art und Weise ausgewählt werden, welche Daten übermittelt werden. Zweckmäßigerweise wird die Charakteristik der Datenmenge dabei von dem Modell berücksichtigt.

Das Gerät ist zweckmäßigerweise eine technisch betreibbare Einheit. Weiter kann das Gerät mehrere technisch betreibbare Einheiten umfassen, wobei jede der Einheiten einzeln funktionsfähig ist.

Beispielsweise kann das Datenverwaltungsmittel ein Server sein. Weiter kann das Datenverwaltungsmittel eine Cloud sein. Insbesondere kann das Datenverwaltungsmittel ein Internet-der-Dinge-Service sein. Die übertragenen Daten können mittels des Datenverwaltungsmittels gespeichert und/oder verwaltet werden. Weiter können die übertragenen Daten mittels des Datenverwaltungsmittels analysiert und/oder visuell dargestellt werden.

Die Cloud kann dabei einen oder mehrere Server, eine oder mehrere Plattformen und/oder einen oder mehrere Anwendungen, d.h. Computerprogramme (die auf der einen oder mehreren Plattformen ablaufen bzw. ablauffähig sind), aufweisen. Bei der Cloud kann es sich bspw. um die sog. MindSphere der Firma Siemens handeln. Die Cloud wird dabei bspw. durch eine oder mehrere Recheneinheiten realisiert, die vorzugsweise einen oder mehrere Dienste zur Verfügung stellen. Diese Dienste wiederum können bspw. durch sog. Applikation Programming Interfaces, APIs, abgerufen werden.

Die Cloud kann somit kommunikativ mit einem oder mehreren Automatisierungsgeräten verbunden sein. Bspw. kann die Verbindung durch ein Gerät, im Folgenden als Schnittstellengerät bezeichnet, eingerichtet sein bzw. werden. Bei dem Schnittstellengerät kann es sich bspw. einer sog. MindConnect Nano der Firma Siemens. Dabei können eines oder mehrere der Automatisierungsgeräte mit dem Schnittstellengeräte verbunden sein. Das Schnittstellengerät kann somit zur Datenaufnahme über eine oder mehrere Protokolle dienen, und ermöglicht die Übertragung dieser Daten an die Cloud. Das Schnittstellengerät kann dabei die Übermittlung verschlüsselter Daten über eine gesicherte Internetverbindung unterstützen, um cloudbasierte Anwendungen und Dienste zu ermöglichen. Zum Herstellen einer kommunikativen Verbindung mit der Cloud, also mit zumindest einem Gerät in der Cloud, wird ein als Schnittstelle zwischen dem jeweiligen Automatisierungsgerät und der Cloud fungierendes, sogenanntes Edge Device verwendet. Ein solches Edge Device verfügt zum Zwecke der Verbindung mit der Cloud über entsprechende Kommunikationsfunktionalität, also im weitesten Sinne über einen (leitungslosen oder leitungsgebundenen) Internetzugang und eine Softwarefunktionalität zur Verwendung üblicher Internetprotokolle, zum Beispiel HTTP und/oder HTTPS.

Ein oder mehrere Automatisierungsgeräte sind dabei vorzugsweise kommunikativ, über ein Bussystem, wie bspw. einen Feldbus, mit dem Schnittstellengerät verbunden. Bei dem Feldbus kann es sich bspw. um ein Industriel Ethernet, insbesondere Profinet, HART oder Profibus, ASI o.ä. handeln. Das Schnittstellengerät kann somit von den Automatisierungsgeräten eine Datenmenge erhalten. Das Schnittstellengerät kann somit wie hier beschrieben eine zur Übertragung vorgesehene Datenmenge erhalten. Diese Datenmenge kann bspw. sämtliche von einem oder mehreren Automatisierungsgeräten an das Schnittstellengerät übertragene Daten enthalten. Vorzugsweise werden dann von dem Schnittstellengerät nur die für die Übertragung anhand des Modells ausgewählten Daten an das Datenverwaltungsmittel übertragen.

Durch das vorgeschlagene Schnittstellengerät kann somit ein bestehendes System, wie bspw. eine Automatisierungsanlage, aufgerüstet werden, ohne dass die Automatisierungsgeräte selbst über ein entsprechendes Modell zur Auswahl von zu übertragenden Daten enthalten. Somit kann die kommunikative Verbindung in einer Automatisierungsanlage, bspw. zwischen den Automatisierungsgeräten und einer Steuereinheit zur Steuerung eines in der Anlage ablaufenden Prozesses, wie gewohnt erfolgen und dabei aber nur die anhand des Modells ausgewählten Daten von dem Schnittstellengerät an das Datenverwaltungsmittel übertragen werden. Die einzelnen Automatisierungsgeräte der Automatisierungsanlage müssen somit nicht über das Datenmodell verfügen und Daten zur Übertragung auswählen. Diese Funktion wird von dem Schnittstellengerät ausgeführt. Im Übrigen wäre eine Auswahl von zur Übertragung vorgesehenen Daten durch ein einzelnes Automatisierungsgerät nicht oder nur schwer möglich, da üblicherweise sämtliche von einem Automatisierungsgerät übertragenen Daten, wie bspw. Lagewerte, Temperaturwerte etc., zur Steuerung, bspw. mittels einer Steuereinheit, wie z.B. einer PLC (Programmable Logic Controller), eines in der Anlage ablaufenden Prozesses dienen. Das Schnittstellengerät ist dabei vorzugsweise vor Ort, d.h. in der Automatisierungsanlage, installiert.

Bei dem einen oder mehreren Automatisierungsgeräten kann es sich um einen oder mehrere Sensoren, einen oder mehrere Aktoren und/oder eine oder mehrere prozessnahe Komponenten handeln. Vorzugsweise weist das Schnittstellengerät somit für jedes Automatisierungsgerät, insbesondere für jeden nach dem gleichen Messprinzip arbeitenden Sensor ein Modell auf. Daten mehrerer Sensoren oder anderer Automatisierungsgeräte des gleichen Typs können somit anhand eines einzigen Modells verarbeitet bzw. ausgewählt werden. Ferner kann ein Schnittstellengerät mehrere Modelle zur Auswahl von zu übertragenden Daten beinhalten, bspw. wenn Automatisierungsgeräte unterschiedlichen Typs in der Anlage vorhanden sind.

Zweckmäßigerweise überträgt das Gerät die Modellierungsdaten zumindest teilweise an das Datenverwaltungsmittel. Weiter ist es bevorzugt, wenn das Modell mittels des Datenverwaltungsmittels bestimmt wird.

Vorzugsweise wird das Modell anhand der an das Datenverwaltungsmittel übertragenen Modellierungsdaten bestimmt.

Die Formulierung, dass das Modell "unter Verwendung von in dem Gerät vorliegenden Modellierungsdaten" bestimmt wird, kann dahingehend aufgefasst werden, dass das Modell zumindest anhand zumindest eines Teils der in dem Gerät vorliegenden Modellierungsdaten bestimmt wird. Das heißt, zur Bestimmung des Modells müssen nicht alle in dem Gerät vorliegenden Modellierungsdaten herangezogen werden. Vorzugsweise wird zur Bestimmung des Modells zumindest ein Teil der in dem Gerät vorliegenden Modellierungsdaten herangezogen. Außerdem können zur Bestimmung des Modells weitere Daten herangezogen werden.

Vorzugsweise ist das Modell ein mathematisches Modell. Weiter kann das Modell ein aktuelles Modell sein. Beispielsweise kann das Modell mittels eines Regressionsverfahrens bestimmt werden. Weiter kann das aktuelle Modell mittels maschinellem Lernen bestimmt werden. Insbesondere kann das aktuelle Modell mittels eines sogenannten Deep Learning bestimmt werden, beispielsweise unter Verwendung eines sogenannten neuralen bzw. neuronalen Netzwerks. Weiter kann das aktuelle Modell mittels eines sogenannten Shallow Learning bestimmt werden, beispielsweise unter Verwendung einer sogenannten Support Vector Maschine.

Vorzugsweise überträgt das Gerät in einem ersten, früheren Übertragungsschritt die Modellierungsdaten zumindest teilweise an das Datenverwaltungsmittel. Zweckmäßigerweise wird das Modell zumindest anhand der, insbesondere in dem ersten, früheren Übertragungsschritt, übertragenen Modellierungsdaten bestimmt.

Weiter ist es bevorzugt, wenn in einem zweiten, zeitlich späteren Übertragungsschritt unter Verwendung des Modells aus der für eine Übertragung vorgesehenen Datenmenge diejenigen Daten, die tatsächlich an das Datenverwaltungsmittel zu übertragen sind, ausgewählt werden und das Gerät die ausgewählten Daten an das Datenverwaltungsmittel überträgt.

Zum Übertragen der Modellierungsdaten, zum Auswählen derjenigen Daten, die tatsächlich an das Datenverwaltungsmittel zu übertragen sind, und/oder zum Übertragen der ausgewählten Daten ist in dem Gerät eine Vermittlungseinheit vorgesehen .

Der zweite, zeitlich spätere Übertragungsschritt kann nach einem zeitlichen Abstand auf den ersten, früheren Übertragungsschritt folgen. Es ist bevorzugt, wenn der zweite, zeitlich spätere Übertragungsschritt direkt, d. h. ohne zeitlichen Abstand, auf den ersten, früheren Übertragungsschritt folgt.

Die Modellierungsdaten können bereits vor dem ersten Übertragungsschritt angefallen sein. Außerdem kann die für eine Übertragung vorgesehene Datenmenge bereits vor dem ersten Übertragungsschritt angefallen sein. Die Modellierungsdaten können beispielsweise zumindest einen Teil der erstgenannten, für eine Übertragung vorgesehenen Datenmenge umfassen. D. h., die in dem zweiten, späteren Übertragungsschritt zu übertragenden Daten und die Modellierungsdaten können aus ein und derselben Datenbasis ausgewählt werden.

Vorzugsweise fallen die Modellierungsdaten innerhalb des ersten, früheren Übertragungsschritts an. Weiter ist es bevorzugt, wenn die für eine Übertragung vorgesehene Datenmenge innerhalb des zweiten, späteren Übertragungsschritts anfällt. Zweckmäßigerweise umfassen die Modellierungsdaten zumindest einen Teil einer anderen Datenmenge als die erstgenannte, für eine Übertragung vorgesehene Datenmenge.

Wenn Daten irgendeiner Art anfallen, dann meint die Erfindung damit vorzugweise, dass die Daten ermittelt, bestimmt, gemessen, ausgelesen und/oder eingelesen werden.

In dem ersten, früheren Übertragungsschritt können alle Modellierungsdaten an das Datenverwaltungsmittel übertragen werden.

Es ist bevorzugt, wenn - insbesondere in dem ersten, früheren Übertragungsschritt - unter Verwendung eines früheren Modells aus den Modellierungsdaten diejenigen Modellierungsdaten, die an das Datenverwaltungsmittel zu übertragen sind, ausgewählt werden. Weiter kann - insbesondere in dem ersten, früheren Übertragungsschritt - das Gerät die ausgewählten Modellierungsdaten an das Datenverwaltungsmittel übertragen. Zumindest anhand der übertragenen Modellierungsdaten kann das erstgenannte Modell bestimmt werden. Das heißt, bei der Bestimmung des erstgenannten Modells kann das frühere Modell aktualisiert werden. Zweckmäßigerweise wird das frühere Modell durch das erstgenannte Modell ersetzt/aktualisiert.

Falls in dem ersten, früheren Übertragungsschritt einige Modellierungsdaten nicht übertragen werden, kann das frühere Modell zur Bestimmung des erstgenannten Modells herangezogen werden. Das heißt, das erstgenannte Modell kann anhand der übertragenen Modellierungswerte und anhand des früheren Modells bestimmt werden.

Falls in dem ersten, früheren Übertragungsschritt einige Modellierungsdaten nicht übertragen werden, können beispielsweise Soll-Daten für die in dem ersten, früheren Übertragungsschritt nicht übertragenen Modellierungsdaten anhand des früheren Modells bestimmt werden. Diese Soll-Daten liegen sinnvollerweise innerhalb des früheren Modells. Falls das frühere Modell eine frühere mathematische Funktion umfasst, können die Soll-Daten beispielsweise auf der früheren mathematischen Funktion liegen. Diese Soll-Daten können zur Bestimmung des erstgenannten Modells herangezogen werden. Das heißt, das erstgenannte Modell kann anhand der übertragenen Modellierungswerte und anhand der Soll-Daten bestimmt werden.

Zweckmäßigerweise ist das in dem ersten, früheren Übertragungsschritt verwendete frühere Modell ein früheres mathematisches Modell.

Das in dem ersten, früheren Übertragungsschritt verwendete frühere Modell kann vorgegeben sein/werden. Beispielsweise kann das in dem ersten, früheren Übertragungsschritt verwendete frühere Modell mittels des Datenverwaltungsmittels vorgegeben werden. Prinzipiell ist es auch möglich, dass das in dem ersten, früheren Übertragungsschritt verwendete frühere Modell mittels des Geräts vorgegeben wird.

Beispielsweise kann das frühere Modell initial vorgegeben sein und/oder durch einen Anwender vorgegeben sein. Weiter kann das frühere Modell bestimmt worden sein.

Vorzugsweise ist das erstgenannte Modell ähnlich zu dem früheren Modell. Vorzugsweise bildet das erstgenannte Modell die Modellierungsdaten besser ab als das frühere Modell.

Das erstgenannte Modell kann eine mathematische Funktion umfassen. Weiter kann das erstgenannte Modell einen Toleranzbereich umfassen. Vorzugsweise legt sich der Toleranzbereich um die mathematische Funktion. Der Toleranzbereich kann explizit oder implizit vorgegeben sein. Beispielsweise kann der Toleranzbereich von den Modellierungsdaten und/oder von dem Modell abhängig sein. Zum Beispiel kann der Toleranzbereich ein vorgegebenes Vielfaches einer Standardabweichung der Funktion sein. Das Vielfache kann eine beliebige reelle Zahl sein, d. h. es muss sich nicht um ein ganzzahliges Vielfaches handeln. Weiter kann der Toleranzbereich eine Prozentzahl sein, die bestimmt, wie viele Modellierungsdaten innerhalb des Toleranzbereichs liegen.

Zweckmäßigerweise werden - insbesondere in dem zweiten, späteren Übertragungsschritt - diejenigen Daten, die innerhalb des Toleranzbereichs liegen, nicht ausgewählt und somit nicht an das Datenverwaltungsmittel übertragen. Ferner ist es bevorzugt, wenn - insbesondere in dem zweiten, späteren Übertragungsschritt - diejenigen Daten, die außerhalb des Toleranzbereichs liegen, ausgewählt werden und somit an das Datenverwaltungsmittel übertragen werden.

Das Verfahren und/oder seine Abwandlungen kann/können wiederholt werden.

Vorzugsweise wird unter Verwendung der in dem zweiten Übertragungsschritt übertragenen Daten ein aktualisiertes Modell bestimmt. In einem dritten Übertragungsschritt, welcher zeitlich nach dem zweiten Übertragungsschritt liegt, kann unter Verwendung des aktualisierten Modells aus einer für eine Übertragung vorgesehene Datenmenge diejenigen Daten, die tatsächlich an das Datenverwaltungsmittel zu übertragen sind, ausgewählt werden und das Gerät kann die ausgewählten Daten an das Datenverwaltungsmittel übertragen.

Die in dem dritten Übertragungsschritt für eine Übertragung vorgesehene Datenmenge kann die gleiche sein, wie die in dem zweiten Übertragungsschritt vorgesehene Datenmenge.

Vorzugsweise unterscheidet sich die in dem dritten Übertragungsschritt für eine Übertragung vorgesehene Datenmenge von der in dem zweiten Übertragungsschritt vorgesehenen Datenmenge. Beispielsweise kann die in dem dritten Übertragungsschritt für eine Übertragung vorgesehene Datenmenge innerhalb des dritten Übertragungsschrittes anfallen.

Prinzipiell ist es möglich, dass das aktualisierte Modell unter Verwendung derselben Modellierungsdaten bestimmt wird, wie das erstgenannte Modell. Das ist dann möglich, wenn die Modellierungsdaten und die für eine Übertragung vorgesehene Datenmenge die gleiche Datenbasis haben. Zweckmäßigerweise unterscheiden sich die Modellierungsdaten und die für eine Übertragung vorgesehene Datenmenge.

Die in dem zweiten Übertragungsschritt für eine Übertragung vorgesehene Datenmenge bildet vorzugsweise aktualisierte Modellierungsdaten. Unter Verwendung der in dem zweiten Übertragungsschritt übertragenen Daten kann ein aktualisiertes Modell bestimmt werden, welches zweckmäßigerweise die aktualisierten Modellierungsdaten beschreibt.

Bei der Bestimmung des aktualisierten Modells kann das erstgenannte Modell aktualisiert werden. Zweckmäßigerweise wird das erstgenannte Modell durch das aktualisierte Modell ersetzt/aktualisiert.

Vorzugsweise wird das Verfahren mehrmals wiederholt, sodass das erstgenannte Modell mehrmals aktualisiert wird.

Das erstgenannte Modell kann zu einem vorgegebenen Zeitpunkt bestimmt und/oder aktualisiert werden. Beispielsweise kann das erstgenannte Modell zu einem explizit vorgegebenen Zeitpunkt bestimmt und/oder aktualisiert werden, beispielsweise zu einer vorgegebenen Uhrzeit oder nach einer vorgegebenen Zeitspanne, beispielsweise nach 5 min, nach 1 h oder nach 12 h. Weiter kann das erstgenannte Modell zu einem implizit vorgegebenen Zeitpunkt bestimmt und/oder aktualisiert werden. Beispielsweise kann das erstgenannte Modell dann bestimmt und/oder aktualisiert werden, wenn eine vorgegebene Anzahl an Daten, beispielsweise insgesamt oder innerhalb einer vorgegebenen Zeit, an das Datenverwaltungsmittel übertragen wurde. Weiter kann das aktuelle Modell dann bestimmt und/oder aktualisiert werden, wenn die an das Datenverwaltungsmittel übertragenen Daten bestimmte Merkmale, z. B. ein bestimmtes Muster, aufweisen.

Die für eine Übertragung vorgesehene Datenmenge kann zeitabhängige Daten umfassen. Weiter kann die für eine Übertragung vorgesehene Datenmenge ortsabhängige Daten umfassen. Ferner kann die für eine Übertragung vorgesehene Datenmenge mehrdimensionale Daten aufweisen.

Die Erfindung und/oder seine Weiterbildungen kann/können als Software und/oder als Hardware, letztes beispielsweise unter Verwendung einer speziellen elektrischen Schaltung, realisiert sein.

Ferner ist eine Realisierung der Erfindung und/oder seiner beschriebenen Weiterbildung - zumindest teilweise, wie auch im Gesamten - möglich durch ein computerlesbares Speichermedium, auf welchem ein Computerprogramm mit Befehlen gespeichert ist, welche Befehle, wenn sie auf einem Computer ausgeführt werden, den Computer veranlassen, die Erfindung oder deren Weiterbildung auszuführen.

Ferner betrifft die Erfindung ein System gemäß Anspruch 12 zur Datenübertragung von einem Gerät an ein Datenverwaltungsmittel. Erfindungsgemäß ist die Vermittlungseinheit dazu eingerichtet, unter Verwendung eines Modells, welches unter Verwendung von in dem Gerät vorliegenden Modellierungsdaten bestimmt wird und welches die Modellierungsdaten beschreibt, aus einer für eine Übertragung vorgesehenen Datenmenge diejenigen Daten, die tatsächlich an das Datenverwaltungsmittel zu übertragen sind, auszuwählen. Weiter kann die Vermittlungseinheit dazu eingerichtet sein, die ausgewählten Daten an das Datenverwaltungsmittel zu übertragen.

Die Vermittlungseinheit kann als Software und/oder als Hardware, letztes beispielsweise unter Verwendung einer speziellen elektrischen Schaltung, realisiert sein. Beispielsweise kann die Vermittlungseinheit ein sogenanntes Gateway sein.

Die Vermittlungseinheit ist Teil des Geräts. Die erfindungsgemäße Vermittlungseinheit kann zur Durchführung des zuvor genannten Verfahrens eingesetzt werden.

Vorzugsweise wird das Modell mittels des Datenverwaltungsmittels bestimmt. Der Vorteil, wenn das Modell mittels des Datenverwaltungsmittels bestimmt wird, liegt darin, dass üblicherweise in dem Datenverwaltungsmittel ausreichende Rechenleistung bzw. Rechenkapazität zur Bestimmung des Modells vorhanden ist. Weiter kann auf diese Weise die Vermittlungseinheit eher schlank gehalten werden. Das heißt, in der Vermittlungseinheit muss keine Rechenleistung bzw. Rechenkapazität zur Bestimmung des Modells vorgesehen werden.

Das System umfasst ein Gerät mit einer Vermittlungseinheit zur Datenübertragung an ein Datenverwaltungsmittel. Die letztgenannte Vermittlungseinheit kann die zuvor genannte Vermittlungseinheit sein.

Erfindungsgemäß ist die letztgenannte Vermittlungseinheit dazu eingerichtet, unter Verwendung eines Modells, welches unter Verwendung von in dem Gerät vorliegenden Modellierungsdaten bestimmt wird und welches die Modellierungsdaten beschreibt, aus einer für eine Übertragung vorgesehenen Datenmenge diejenigen Daten, die tatsächlich an das Datenverwaltungsmittel zu übertragen sind, auszuwählen. Weiter ist das Gerät dazu eingerichtet, die ausgewählten Daten an das Datenverwaltungsmittel zu übertragen. Insbesondere kann die Vermittlungseinheit dazu eingerichtet sein, die ausgewählten Daten an das Datenverwaltungsmittel zu übertragen.

Das Datenverwaltungsmittel ist erfindungsgemäß dazu eingerichtet, unter Verwendung von in dem Gerät vorliegenden Modellierungsdaten ein Modell zu bestimmen, welches die Modellierungsdaten beschreibt.

Erfindungsgemäß weist das Gerät eine Vermittlungseinheit auf, welche dazu eingerichtet ist, unter Verwendung des Modells aus einer für eine Übertragung vorgesehenen Datenmenge diejenigen Daten, die tatsächlich an das Datenverwaltungsmittel zu übertragen sind, auszuwählen.

Weiter ist das Gerät, insbesondere seine Vermittlungseinheit, dazu eingerichtet, die ausgewählten Daten an das Datenverwaltungsmittel zu übertragen.

Das System kann zur Durchführung des zuvor genannten Verfahrens eingesetzt werden. Insbesondere können die Elemente des Systems die im Zusammenhang mit dem Verfahren genannten Elemente sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vermittlungseinheit, dem erfindungsgemäßen Gerät und/oder dem erfindungsgemäßen System kombinierbar. So sind Verfahrensmerkmale auch als Eigenschaft der Vermittlungseinheit, des Geräts und/oder des Systems gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein System umfassend ein Datenverwaltungsmittel und ein Gerät mit einer Vermittlungseinheit;
- FIG 2: eine zeitabhängige Folge von Daten mit einer ersten Funktion; und
- FIG 3: eine anhand der zeitabhängigen Folge von Daten aus FIG 2 aktualisierte Funktion.

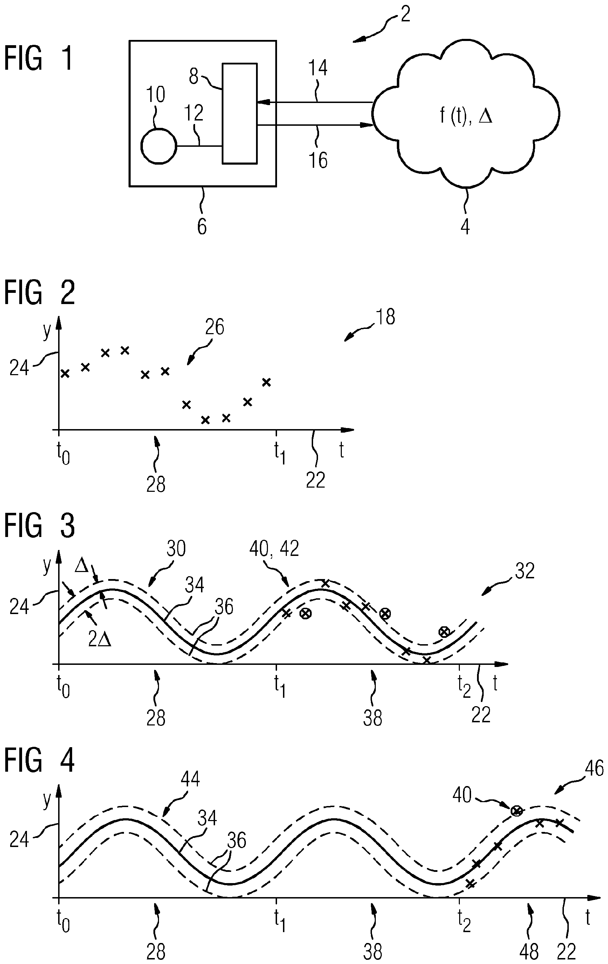

FIG 1 zeigt ein System 2 mit einem Datenverwaltungsmittel 4 und einem Gerät 6. Das Gerät 6 umfasst eine Vermittlungseinheit 8. Außerdem umfasst das Gerät 6 zumindest einen Sensor 10. Der Sensor 10 ist mit der Vermittlungseinheit 8 über eine Datenverbindung 12 verbunden.

In dem Gerät 6 fallen mehrere Daten (vgl. FIG 2) an. Beispielsweise werden in dem Gerät 6 die Daten mittels des Sensors 10 gemessen. Beispielsweise sind die Daten zeitabhängige Messwerte des Sensors 10.

In dem vorliegenden Beispiel entsprechend die angefallenen Daten einer für eine Übertragung vorgesehenen Datenmenge.

Die angefallenen Daten, welche die für eine Übertragung vorgesehene Datenmenge bilden, werden teilweise in drei Übertragungsschritten an das Datenverwaltungsmittel 4 übertragen.

Die drei Übertragungsschritte sind in FIG 2 bis 4 dargestellt.

FIG 2 zeigt ein Diagramm 18. Auf der x-Achse 22 des Diagramms 18 ist eine Zeit t aufgetragen. Auf der y-Achse 24 des Diagramms 18 kann ein beliebiger Parameter y aufgetragen sein. In diesem Beispiel ist auf der y-Achse 24 der zeitabhängige Messwert des Sensors 10 aufgetragen.

In FIG 2 sind beispielhaft Modellierungsdaten 26 als Kreuze dargestellt. Die Modellierungsdaten 26 sind innerhalb eines ersten Übertragungsschritts 28, welcher von t₀ bis t₁ reicht, in dem Gerät angefallen. Die Modellierungsdaten sind in diesem Beispiel innerhalb des ersten Übertragungsschritts 28 in dem Gerät angefallen.

In diesem Beispiel werden die Modellierungsdaten 26 vollständig an das Datenverwaltungsmittel 4 übertragen. Es wäre auch möglich, dass die Modellierungsdaten 26 nur teilweise an das Datenverwaltungsmittel 4 übertragen werden. Der in FIG 1 eingezeichnete Pfeil 16 verdeutlicht (unter anderem) die - zumindest teilweise - Übertragung der Modellierungsdaten 26 von dem Gerät 6 an das Datenverwaltungsmittel 4.

Das Datenverwaltungsmittel 4 bestimmt anhand der übertragenen Modellierungsdaten 26 ein erstes Modell 30. Das erste Modell 30 ist bespielhaft in FIG 3 dargestellt.

FIG 3 zeigt ein Diagramm 32. Die nachfolgende Beschreibung beschränkt sich im Wesentlichen auf die Unterschiede zum Diagramm aus FIG 2, auf das bezüglich gleich bleibender Merkmale verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In das Diagramm 32 ist das erste Modell 30 eingetragen, welches anhand der Modellierungsdaten 26 aus FIG 2 bestimmt wurde. In diesem Beispiel weist das erste Modell 30 eine mathematische Funktion f(t) auf, welche in der Zeichnung als durchgezogene Linie 34 dargestellt ist. Weiter weist das Modell einen Toleranzbereich auf. Der Toleranzbereich legt sich um die mathematische Funktion f(t). In der Zeichnung wird der Toleranzbereich durch zwei gestrichelte Linien 36 abgegrenzt, sodass sich der Toleranzbereich zwischen den zwei gestrichelten Linien 36 in FIG 3 befindet.

Die Breite des Toleranzbereichs kann abhängig von der Funktion f(t) sein. Beispielsweise kann die Breite des Toleranzbereichs ein vorgegebenes Vielfaches eines Maximalwerts der Funktion f(t) sein.

In diesem Beispiel ist eine Breite des Toleranzbereichs derart gewählt, dass der kürzeste Abstand eines jeden Punktes auf einer der gestrichelten Linien 36 zu der Funktion f(t) gleich Δ ist. Der Toleranzbereich kann jedoch auch in einer anderen Weise gewählt werden.

Das erste Modell 30 wird von der Datenverwaltungsmittel 4 an die Vermittlungseinheit 8 übertragen. Die Übertragung des ersten Modells 30 ist in FIG 1 durch einen Pfeil 14 von der Datenverwaltungsmittel 4 an die Vermittlungseinheit 8 dargestellt.

Innerhalb des zweiten Übertragungsschritts 38, welcher zeitlich später als der erste Übertragungsschritt 28 ist, fallen weitere Daten an. In diesem Beispiel schließt sich der zweite Übertragungsschritt 38 an den ersten Übertragungsschritt 28 an. Der zweite Übertragungsschritt 38 liegt zwischen dem vorgegebenen Startzeitpunkt t₁ und dem vorgegebenen Endzeitpunkt t₂.

Die in dem zweiten Übertragungsschritt 38 anfallenden Daten stellen eine für eine Übertragung vorgesehene Datenmenge 40 dar. Die für eine Übertragung vorgesehenen Datenmenge 40, d. h. hier die in dem zweiten Übertragungsschritt 38 anfallenden Daten, sind in FIG 2 als Kreuze dargestellt.

Unter Verwendung des ersten Modells 30 werden aus der für eine Übertragung vorgesehenen Datenmenge 40 diejenigen Daten, die tatsächlich an das Datenverwaltungsmittel 4 zu übertragen sind, ausgewählt. Das Gerät 6, insbesondere die Vermittlungseinheit 8, überträgt die ausgewählten Daten an das Datenverwaltungsmittel 4. Die Übertragung der ausgewählten Daten von dem Gerät 6, insbesondere von der Vermittlungseinheit 8, an das Datenverwaltungsmittel 4 ist in FIG 1 mittels eines Pfeils 16 dargestellt.

Das Datenverwaltungsmittel 4 empfängt die übertragenen Daten und speichert sie.

Diejenigen Daten, die innerhalb des Toleranzbereichs 2Δ liegen - d. h. hier diejenigen Daten, die in FIG 3 zwischen den zwei gestrichelten Linien 36 liegen -, werden nicht ausgewählt und werden somit nicht an das Datenverwaltungsmittel 4 übertragen.

Diejenigen Daten, die außerhalb des Toleranzbereichs 2Δ liegen, sind in FIG 3 als Kreuz mit einem umschließenden Kreis dargestellt. Diejenigen Daten, die außerhalb des Toleranzbereichs 2Δ liegen, werden ausgewählt und werden somit an das Datenverwaltungsmittel 4 übertragen.

Die in dem zweiten Übertragungsschritt 38 für eine Übertragung vorgesehene Datenmenge 40 bildet aktualisierte Modellierungsdaten 42. Unter Verwendung der in dem zweiten Übertragungsschritt 38 übertragenen Daten bestimmt das Datenverwaltungsmittel 4 ein aktualisiertes Modell 44. Das aktualisierte Modell 44 beschreibt die aktualisierten Modellierungsdaten 42. Das aktualisierte Modell 44 ist in FIG 4 dargestellt.

In diesem Beispiel weist das aktualisierte Modell 44 eine aktualisierte Funktion fₐ(t) auf.

Insbesondere wurde das aktualisierte Modell 44 zumindest anhand der in dem zweiten Übertragungsschritt übertragenen Daten bestimmt.

Es wurden nur ein Teil der in dem zweiten Übertragungsschritt für eine Übertragung vorgesehenen Datenmenge 40 an das Datenverwaltungsmittel 4 übertragen.

Das aktualisierte Modell 44 kann (zusätzlich) unter Verwendung des früheren, ersten Modells 30 bestimmt werden. Das heißt, dass zur Bestimmung der aktualisierten Funktion fₐ(t) auch die bisherige Funktion f(t) herangezogen wird.

Weiter kann zur Bestimmung der aktualisierten Funktion fₐ(t) eine vorgegebene Datenrate herangezogen werden. Die Datenrate entspricht der Anzahl an Daten pro Zeiteinheit. Das heißt, dass der Abstand zweier Daten dem Kehrwert der Datenrate entspricht. Beispielsweise kann die Datenrate von einer Steuerung des Geräts 6 und/oder von dem Sensor 10 vorgegeben sein/werden. Die Datenrate kann an das Datenverwaltungsmittel 4 übermittelt werden, in dem Datenverwaltungsmittel 4 eingegeben werden und/oder von dem Datenverwaltungsmittel 4 (insbesondere anhand der übermittelten Daten) bestimmt werden.

Aus der bisherigen Funktion f(t) sowie aus der vorgegebenen Datenrate werden Soll-Daten für nicht übermittelte Daten berechnet. Beispielsweise kann anhand der Datenrate der jeweilige Zeitwert bestimmt werden, zu der die nicht übertragenen Daten angefallen sind. Die Solldaten können beispielsweise den Funktionswert f(t) zu dem jeweiligen Zeitwert und den jeweiligen Zeitwert umfassen.

Diese Soll-Daten für nicht übermittelte Daten werden ebenfalls zur Aktualisierung der Funktion herangezogen. Die aktualisierte Funktion fₐ(t) wird anhand der in dem zweiten Übertragungsschritt 38 übertragenen Daten und der Soll-Werte für nicht übermittelte Daten bestimmt.

FIG 4 zeigt ein Diagramm 46. Die nachfolgende Beschreibung beschränkt sich im Wesentlichen auf die Unterschiede zum Diagramm aus FIG 3, auf das bezüglich gleich bleibender Merkmale verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In das Diagramm 46 ist das aktualisierte Modell 44 eingetragen, welches unter Verwendung der in dem zweiten Übertragungsschritt für eine Übertragung vorgesehenen Datenmenge 40, welche der aktualisierten Modellierungsdaten 42 entspricht, bestimmt wurde.

In diesem Beispiel weist das aktualisierte Modell 44 eine aktualisierte Funktion fₐ(t) auf, welche in der Zeichnung als durchgezogene Linie 34 dargestellt ist. Weiter weist das Modell einen - gegebenenfalls aktualisierten - Toleranzbereich auf. Der (ggf. aktualisierte) Toleranzbereich legt sich um die mathematische Funktion fₐ(t). In der Zeichnung wird der (ggf. aktualisierte) Toleranzbereich durch zwei gestrichelte Linien 36 abgegrenzt, sodass sich der (ggf. aktualisierte) Toleranzbereich zwischen den zwei gestrichelten Linien 36 in FIG 4 befindet.

Zeitlich nach dem zweiten Übertragungsschritt 38 liegt ein dritter Übertragungsschritt 48. Der dritte übertragungsschritt 48 schließt hier direkt an den zweiten Übertragungsschritt 38 an und beginnt zum Startzeitpunkt t₂.

In dem dritten Übertragungsschritt 48 fallen in dem Gerät 6 weitere Daten an. Die in dem dritten Übertragungsschritt 48 anfallenden Daten stellen eine für eine Übertragung vorgesehene Datenmenge 40 dar. Die für eine Übertragung vorgesehenen Datenmenge 40, d. h. hier die in dem zweiten Übertragungsschritt 38 anfallenden Daten, sind in FIG 4 als Kreuze dargestellt.

In dem dritten Übertragungsschritt 48 wird unter Verwendung des aktualisierten Modells 44 aus der für eine Übertragung vorgesehenen Datenmenge 40 diejenigen Daten, die tatsächlich an das Datenverwaltungsmittel 4 zu übertragen sind, ausgewählt und das Gerät überträgt die ausgewählten Daten an das Datenverwaltungsmittel 4. Die Auswahl in dem dritten Übertragungsschritt 48 erfolgt in analoger Weise wie die Auswahl in dem zweiten Übertragungsschritt 38 (vgl. FIG 3).

Anhand der in dem dritten Übertragungsschritt 48 übertragenen Daten kann das aktualisierte Modell 44 wiederum aktualisiert werden.

Aufgrund des beschriebenen Verfahrens muss nicht die gesamte für eine Übertragung vorgesehene Datenmenge 40 an das Datenverwaltungsmittel 4 übertragen werden. Durch die Auswahl der tatsächlich an das Datenverwaltungsmittel 4 zu übertragen Daten kann die Anzahl der übertragenen Daten - und damit das übertragene Datenvolumen - reduziert werden. Beispielsweise kann die Anzahl der übertragenen Daten - und damit vorzugsweise das übertragene Datenvolumen - um mindestens 50%, vorzugsweise um mindestens 80%, reduziert werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, welcher durch die Ansprüche definiert wird, zu verlassen.

## Patentansprüche

1. Verfahren zur Datenübertragung (16) von einem Gerät (6) in einer Automatisierungsanlage an ein Datenverwaltungsmittel (4), bei dem
unter Verwendung von in dem Gerät (6) vorliegenden Modellierungsdaten (26, 42) ein Modell (30, 44) bestimmt wird, welches die Modellierungsdaten (26, 42) beschreibt,
unter Verwendung des Modells (30, 44) aus einer für eine Übertragung vorgesehenen Datenmenge (40) diejenigen Daten, die tatsächlich an das Datenverwaltungsmittel (4) zu übertragen sind, ausgewählt werden und
das Gerät (6) die ausgewählten Daten an das Datenverwaltungsmittel (4) überträgt,
wobei das Gerät (6) die Vermittlungseinheit (8) umfasst, wobei die Vermittlungseinheit ein Gateway ist, und wobei die Verfahrensschritte des Anspruchs von der Vermittlungseinheit (8) des Geräts (6) ausgeführt werden, und
wobei das Datenverwaltungsmittel (4) eine Cloud und/oder ein Internet-der-Dinge-Service ist,
wobei mehrere Automatisierungsgeräte mit dem Gerät verbunden sind, und
wobei die von den Automatisierungsgeräten übertragenen Daten zur Steuerung eines in der Anlage ablaufenden Prozesses mittels einer Steuereinheit dienen,
wobei das Gerät die zur Übertragung vorgesehene Datenmenge erhält, und wobei die Datenmenge sämtliche von mehreren Automatisierungsgeräten an das Gerät übertragene Daten enthält.

2. Verfahren nach Anspruch 1, wobei das Gerät (6) die Modellierungsdaten (26, 42) zumindest teilweise an das Datenverwaltungsmittel (4) überträgt und das Modell (30, 44) mittels des Datenverwaltungsmittels (4) bestimmt wird.

3. Verfahren nach einem der vorhergehenden Ansprüche, wobei das Gerät (6) in einem ersten, früheren Übertragungsschritt (28, 38) die Modellierungsdaten (26, 42) zumindest teilweise an das Datenverwaltungsmittel (4) überträgt,
zumindest anhand der übertragenen Modellierungsdaten (26, 42) das Modell (30, 44) bestimmt wird und
in einem zweiten, zeitlich späteren Übertragungsschritt (38, 48)
- unter Verwendung des Modells (30, 44) aus der für eine Übertragung vorgesehenen Datenmenge (40) diejenigen Daten, die tatsächlich an das Datenverwaltungsmittel (4) zu übertragen sind, ausgewählt werden und
- das Gerät (6) die ausgewählten Daten an das Datenverwaltungsmittel (4) überträgt.

4. Verfahren nach Anspruch 3, wobei
die Modellierungsdaten (26, 42) innerhalb des ersten, früheren Übertragungsschritts (28, 38) anfallen und
die für eine Übertragung vorgesehene Datenmenge (40) innerhalb des zweiten, späteren Übertragungsschritts (38, 48) anfällt.

5. Verfahren nach Anspruch 3 oder 4, wobei
in dem ersten, früheren Übertragungsschritt (38)
- unter Verwendung eines früheren Modells (30) aus den Modellierungsdaten (42) diejenigen Modellierungsdaten (42), die an das Datenverwaltungsmittel (4) zu übertragen sind, ausgewählt werden,
- das Gerät die ausgewählten Modellierungsdaten (42) an das Datenverwaltungsmittel (4) überträgt und
zumindest anhand der übertragenen Modellierungsdaten (42) das erstgenannte Modell (44) bestimmt wird.

6. Verfahren nach Anspruch 5, wobei
das in dem ersten, früheren Übertragungsschritt (38) verwendete frühere Modell (30) vorgegeben ist.

7. Verfahren nach Anspruch 5 oder 6, wobei
falls in dem ersten, früheren Übertragungsschritt (38) einige Modellierungsdaten (42) nicht übertragen werden, Soll-Daten für die in dem ersten, früheren Übertragungsschritt (38) nicht übertragenen Modellierungsdaten (42) anhand des früheren Modells (30) bestimmt werden,
wobei die Soll-Daten zur Bestimmung des erstgenannten Modells (44) herangezogen werden.

8. Verfahren nach einem der Ansprüche 3 bis 7, wobei
unter Verwendung der in dem zweiten Übertragungsschritt (38) übertragenen Daten ein aktualisiertes Modell (44) bestimmt wird, und
in einem dritten Übertragungsschritt (48), welcher zeitlich nach dem zweiten Übertragungsschritt (38) liegt,
- unter Verwendung des aktualisierten Modells (44) aus einer für eine Übertragung vorgesehene Datenmenge (40) diejenigen Daten, die tatsächlich an das Datenverwaltungsmittel (4) zu übertragen sind, ausgewählt werden und
- das Gerät (6) die ausgewählten Daten an das Datenverwaltungsmittel (4) überträgt.

9. Verfahren nach einem der vorherigen Ansprüche, wobei
die in dem zweiten Übertragungsschritt (38) für eine Übertragung vorgesehene Datenmenge (40) aktualisierte Modellierungsdaten (42) bilden und
unter Verwendung der in dem zweiten Übertragungsschritt (38) übertragenen Daten ein aktualisiertes Modell (44) bestimmt wird, welches die aktualisierten Modellierungsdaten (42) beschreibt.

10. Verfahren nach einem der vorhergehenden Ansprüche,
wobei das erstgenannte Modell (30, 44) eine mathematische Funktion (34) und einen Toleranzbereich umfasst, wobei die Funktionswerte der mathematischen Funktion (34) innerhalb des Toleranzbereichs liegen, und
dass diejenigen Daten, die innerhalb des Toleranzbereichs liegen, nicht ausgewählt werden und somit nicht an das Datenverwaltungsmittel (4) übertragen werden.

11. Verfahren nach einem der vorhergehenden Ansprüche,
wobei das erstgenannte Modell (30, 44) eine mathematische Funktion (34) und einen Toleranzbereich umfasst, wobei die Funktionswerte der mathematischen Funktion (34) innerhalb des Toleranzbereichs liegen, und
dass diejenigen Daten, die außerhalb des Toleranzbereichs liegen, ausgewählt werden und somit an das Datenverwaltungsmittel (4) übertragen werden.

12. System umfassend ein Gerät (6) mit einer Vermittlungseinheit (8) zur Datenübertragung (16) von dem Gerät (6) an ein Datenverwaltungsmittel (4), wobei das System ferner eine Automatisierungsanlage mit mehrere Automatisierungsgeräten umfasst, wobei das Gerät in der Anlage angeordnet ist, wobei die Vermittlungseinheit (8) dazu eingerichtet ist,
unter Verwendung eines Modells (30, 44), welches unter Verwendung von in dem Gerät (6) vorliegenden Modellierungsdaten (26, 42) bestimmt wird und welches die Modellierungsdaten (26, 42) beschreibt, aus einer für eine Übertragung vorgesehenen Datenmenge (40) diejenigen Daten, die tatsächlich an das Datenverwaltungsmittel (4) zu übertragen sind, auszuwählen und
die ausgewählten Daten an das Datenverwaltungsmittel (4) zu übertragen,
wobei das Gerät mit mehreren Automatisierungsgeräten über eine Datenverbindung verbunden ist, über welchen die Daten bereitgestellt werden,
wobei die Vermittlungseinheit (8) ein Gateway ist, und wobei das Datenverwaltungsmittel (4) eine Cloud und/oder ein Internet-der-Dinge-Service ist und wobei die von einem Automatisierungsgerät übertragenen Daten zur Steuerung eines in der Anlage ablaufenden Prozesses mittels einer Steuereinheit dienen,
wobei das Gerät die zur Übertragung vorgesehene Datenmenge erhält, und wobei die Datenmenge sämtliche von mehreren Automatisierungsgeräten an das Gerät übertragene Daten enthält.

## Claims

1. Method for transferring data (16) from a device (6) in an automation plant to a data management means (4), in which using modelling data (26, 42) present in the device (6), a model (30, 44) is determined that describes the modelling data (26, 42),
using the model (30, 44), the data from a volume of data (40) provided for a transfer, which is actually to be transferred to the data management means (4), is selected and
the device (6) transfers the selected data to the data management means (4),
wherein the device (6) includes the switching unit (8), wherein the switching unit is a gateway, and wherein the method steps of the claim are carried out by the switching unit (8) of the device (6), and
wherein the data management means (4) is a cloud and/or an Internet of Things service,
wherein a number of automation devices are connected to the device, and
wherein the data transferred from the automation devices serves to control a process running in the plant by means of a control unit,
wherein the device receives the volume of data provided for transfer, and wherein the volume of data contains all data transferred from a number of automation devices to the device.

2. Method according to claim 1, wherein
the device (6) transfers at least part of the modelling data (26, 42) to the data management means (4) and the model (30, 44) is determined by means of the data management means (4).

3. Method according to one of the preceding claims, wherein the device (6) transfers at least part of the modelling data (26, 42) to the data management means (4) in a first, earlier transfer step (28, 38),
the model (30, 44) is determined at least on the basis of the transferred modelling data (26, 42) and
in a second transfer step (38, 48) later in time
- using the model (30, 44), the data from the volume of data (40) provided for a transfer that is actually to be transferred to the data management means (4) is selected and
- the device (6) transfers the selected data to the data management means (4).

4. Method according to claim 3, wherein
the modelling data (26, 42) is obtained within the first, earlier transfer step (28, 38) and
the volume of data (40) provided for a transfer is obtained within the second, later transfer step (38, 48).

5. Method according to claim 3 or 4, wherein,
in the first, earlier transfer step (38)
- using an earlier model (30), the modelling data (42) from the modelling data (42) that is to be transferred to the data management means (4) is selected,
- the device transfers the selected modelling data (42) to the data management means (4) and
the first-mentioned model (44) is at least determined on the basis of the transferred modelling data (42).

6. Method according to claim 5, wherein
the earlier model (30) used in the first, earlier transfer step (38) is predetermined.

7. Method according to claim 5 or 6, wherein,
if a few items of modelling data (42) are not transferred in the first, earlier transfer step (38), required data for the modelling data (42) not transferred in the first, earlier transfer step (38) is determined on the basis of the earlier model (30),
wherein the required data is included for determining the first-mentioned model (44).

8. Method according to one of claims 3 to 7, wherein,
using the data transferred in the second transfer step (38), an updated model (44) is determined, and
in a third transfer step (48), which lies after the second transfer step (38) in time,
- using the updated model (44), the data from a volume of data (40) provided for a transfer that is actually to be transferred to the data management means (4), is selected and
- the device (6) transfers the selected data to the data management means (4).

9. Method according to one of the preceding claims, wherein the volume of data (40) provided for a transfer in the second transfer step (38) forms updated modelling data (42) and using the data transferred in the second transfer step (38), an updated model (44) is determined that describes the updated modelling data (42).

10. Method according to one of the preceding claims, wherein the first-mentioned model (30, 44) comprises a mathematical function (34) and a tolerance range, wherein the function values of the mathematical function (34) lie within the tolerance range, and that
the data that lies within the tolerance range is not selected and is thus not transferred to the data management means (4).

11. Method according to one of the preceding claims, wherein the first-mentioned model (30, 44) comprises a mathematical function (34) and a tolerance range, wherein the function values of the mathematical function (34) lie within the tolerance range and that
the data that lies outside the tolerance range is selected and is thus transferred to the data management means (4).

12. System comprising a device (6) with a switching unit (8) for transferring data (16) from the device (6) to a data management means (4), wherein the system further comprises an automation plant with a number of automation devices, wherein the device is arranged in the plant, wherein the switching unit (8) is configured,
using a model (30, 44) that is determined using modelling data (26, 42) present in the device (6) and which describes the modelling data (26, 42), to select from a volume of data (40) provided for a transfer the data that is actually to be transferred to the data management means (4), and
to transfer the selected data to the data management means (4),
wherein the device is connected to a number of automation devices via a data connection, via which the data is provided,
wherein the switching unit (8) is a gateway, and
wherein the data management means is a cloud and/or an Internet of Things service and wherein the data transferred from an automation device serves to control a process running in the plant by means of a control unit,
wherein the device receives the volume of data provided for transfer, and wherein the volume of data contains all data transferred from a number of automation devices to the device.

## Revendications

1. Procédé de transmission (16) de données d'un appareil (6) d'une installation d'automatisation à un moyen (4) de gestion de données, dans lequel
en utilisant des données (26, 42) de modélisation présentes dans l'appareil (6), on détermine un modèle (30, 44), qui décrit les données (26, 42) de modélisation,
en utilisant le modèle (30, 44), on sélectionne, dans un ensemble (40) de données prévu pour une transmission, les données, qui doivent être transmises réellement au moyen (4) de gestion de données et
l'appareil (6) transmet les données sélectionnées au moyen (4) de gestion de données,
dans lequel l'appareil (6) comprend l'unité (8) de transmission, l'unité de transmission étant un gateway, et dans lequel les stades de procédé de la revendication sont effectués par l'unité (8) de transmission de l'appareil (6), et
dans lequel le moyen (4) de gestion de données est un nuage et/ou un internet des objets,
dans lequel plusieurs appareils d'automatisation sont reliés à l'appareil, et
dans lequel les données transmises par les appareils d'automatisation servent à commander, au moyen d'une unité de commande, un processus se déroulant dans l'installation,
dans lequel l'appareil reçoit l'ensemble de données prévu pour la transmission, et dans lequel l'ensemble de données contient l'ensemble des données transmises à l'appareil par plusieurs appareils d'automatisation.

2. Procédé suivant la revendication 1, dans lequel l'appareil (6) transmet les données (26, 42) de modélisation, au moins en partie, au moyen (4) de gestion de données et on détermine le modèle (30, 44) au moyen du moyen (4) de gestion de données.

3. Procédé suivant l'une des revendications précédentes, dans lequel
l'appareil (6) transmet, dans un premier stade (28, 38) de transmission antérieure, les données (26, 42) de modélisation, au moins en partie, au moyen (4) de gestion de données,
on détermine le modèle (30, 44) au moins à l'aide des données (26, 42) de modélisation transmises et
dans un deuxième stade (38, 48) de transmission, plus tard dans le temps,
- en utilisant le modèle (30, 44), on sélectionne, dans l'ensemble (40) de données prévu pour une transmission, les données, qui doivent être transmises réellement au moyen (4) de gestion de données et
- l'appareil (6) transmet les données sélectionnées au moyen (4) de gestion de données.

4. Procédé suivant la revendication 3, **caractérisé en ce que** les données (26, 42) de modélisation sont produites dans le premier stade (28, 38) de transmission antérieure et
l'ensemble (40) de données prévu pour la transmission est produit dans le deuxième stade (38, 48) de transmission ultérieure.

5. Procédé suivant la revendication 3 ou 4, dans lequel dans le premier stade (38) de transmission antérieure
- en utilisant un modèle (30) antérieur, on sélectionne, dans les données (42) de modélisation, les données (42) de modélisation, qui doivent être transmises au moyen (4) de gestion de données,
- l'appareil transmet les données (42) de modélisation sélectionnées au moyen (4) de gestion de données et
on détermine le modèle (44) mentionné en premier, au moins à l'aide des données (42) de modélisation transmises.

6. Procédé suivant la revendication 5, **caractérisé en ce que** le modèle (30) antérieur, utilisé dans le premier stade (38) de transmission antérieure, est donné à l'avance.

7. Procédé suivant la revendication 5 ou 6, dans lequel,
si dans le premier stade (38) de transmission antérieure, on ne transmet pas certaines données (42) de modélisation, on détermine, à l'aide du modèle (30) antérieur, des données de consigne pour les données (42) de modélisation non transmises dans le premier stade (38) de transmission antérieure,
dans lequel on tire parti des données de consigne pour déterminer le modèle (44) mentionné en premier.

8. Procédé suivant l'une des revendications 3 à 7, dans lequel,
en utilisant les données transmises dans le deuxième stade (38) de transmission, on détermine un modèle (44) mis à jour, et
dans un troisième stade (48) de transmission, qui dans le temps est postérieur au deuxième stade (38) de transmission,
- en utilisant le modèle (44) mis à jour, on sélectionne, dans un ensemble (40) de données prévu pour une transmission, les données, qui doivent être transmises réellement au moyen (4) de gestion de données et
- l'appareil (6) transmet les données sélectionnées au moyen (4) de gestion de données.

9. Procédé suivant l'une des revendications précédentes, dans lequel
l'ensemble (40) de données prévu pour une transmission dans le deuxième stade (38) de transmission forme des données (42) de modélisation mises à jour et
en utilisant les données transmises dans le deuxième stade (38) de transmission, on détermine un modèle (44) mis à jour, qui décrit les données (42) de modélisation mises à jour.

10. Procédé suivant l'une des revendications précédentes, dans lequel
le modèle (30, 44) mentionné en premier comprend une fonction (34) mathématique et une plage de tolérance, les valeurs de la fonction (34) mathématique se trouvant dans la plage de tolérance, et
en ce que l'on ne sélectionne pas les données, qui sont dans la plage de tolérance et, ainsi, on ne les transmet pas au moyen (4) de gestion de données.

11. Procédé suivant l'une des revendications précédentes, dans lequel
le modèle (30, 44) mentionné en premier comprend une fonction (34) mathématique et une plage de tolérance, les valeurs de la fonction (34) mathématique se trouvant dans la plage de tolérance, et
en ce que l'on sélectionne les données, qui se trouvent à l'extérieur de la plage de tolérance, et on les transmet ainsi au moyen (4) de gestion de données.

12. Système comprenant un appareil (6) ayant une unité (8) de transmission pour la transmission (16) de données de l'appareil (6) à un moyen (4) de gestion de données, le système comprenant, en outre, une installation d'automatisation ayant plusieurs appareils d'automatisation, l'appareil étant disposé dans l'installation, l'unité (8) de transmission étant conçue pour, en utilisant un modèle (30, 44), qui est déterminé en utilisant des données (26, 42) de modélisation présentes dans l'appareil (6) et qui décrit les données (26, 42) de modélisation, sélectionner, dans un ensemble (40) données prévu pour une transmission, les données, qui doivent être réellement transmises au moyen (4) de gestion de données et
pour transmettre les données sélectionnées au moyen (4) de gestion de données,
dans lequel
l'appareil est relié à plusieurs appareils d'automatisation par l'intermédiaire d'une liaison de données, par laquelle les données sont mises à disposition,
l'unité (8) de transmission étant un gateway, et le moyen (4) de gestion de données étant un nuage et/ou un service d'internet des objets et les données transmises par un appareil d'automatisation servant, au moyen d'une unité de commande, à commander un processus se déroulant dans l'installation,
dans lequel l'appareil reçoit l'ensemble de données prévu pour la transmission, et dans lequel l'ensemble de données contient l'ensemble de données transmises à l'appareil par plusieurs appareils d'automatisation.
